# EUROPEAN PATENT APPLICATION

(11) **EP 4 231 428 A1**
(43) Date of publication of application: **23.08.2023**
(21) Application number: 21883029.7
(22) Date of filing: 16.09.2021
(51) Int. Cl.: H01M 50/342, H01M 50/578, H01M 50/152, H01M 50/166

(54) **SECONDARY BATTERY**

(30) Priority: 19.10.2020 KR 20200135277
(71) Applicant: Samsung SDI Co., Ltd., Yongin-si, Gyeonggi-do 17084 (KR)
(72) Inventor: KIM, Dae Kyu, Yongin-si, Gyeonggi-do 17084 (KR)
(74) Representative: Marks & Clerk LLP
(86) International application number: PCT/KR2021/012689
(87) International publication number: WO 2022/085957

(57) **Abstract**

The present invention relates to a secondary battery which can ensure sealing capability. Disclosed as an example is a secondary battery comprising: an electrode assembly; a case in which the electrode assembly is accommodated; and a cap assembly which is coupled to the top of the case and comprises a cap-up, a safety vent provided under the cap-up and having a vent extension portion extending to the top of the cap-up so as to cover the edge of the cap-up, and a cap-down provided under the safety vent and electrically connected to the electrode assembly, wherein the vent extension portion has a welded area formed by welding the cap-up and the safety vent to each other, and the welded area is spaced apart from the end of the case.

## Description

### TECHNICAL FIELD

The present invention relates to a secondary battery.

### BACKGROUND ART

Unlike a primary battery which may not be charged, a secondary battery is a battery that may be charged or discharged. Low-capacity batteries in which one battery cell is packaged in a pack form are used in small portable electronic devices such as smart phones, feature phones, notebook computers, digital cameras, and camcorders, and large-capacity batteries in which several tens of battery packs are connected in units of battery packs are widely used as power sources for driving motors and batteries for power storage in hybrid vehicles and electric vehicles. Lithium ion secondary batteries can be classified into cylindrical, prismatic, and pouch-type secondary batteries in terms of shape.

Specifically, a cylindrical lithium ion secondary battery generally includes a cylindrical electrode assembly, a cylindrical case to which the electrode assembly is coupled, an electrolyte injected into the case to enable movement of lithium ions, a cap assembly coupled to one side of the case to prevent leakage of the electrolyte and to prevent the separation of the electrode assembly, and so on.

The above information disclosed in this Background section is only for enhancement of understanding of the background of the invention and therefore it may contain information that does not constitute prior art.

### DESCRIPTION OF EMBODIMENTS

### TECHNICAL PROBLEM

The present invention provides a secondary battery which can ensure sealing capability.

### SOLUTION TO PROBLEM

A secondary battery according to the present invention may include: an electrode assembly; a case in which the electrode assembly is accommodated; and a cap assembly which is coupled to the top of the case and comprises a cap-up, a safety vent provided under the cap-up and having a vent extension portion extending to the top of the cap-up so as to cover the edge of the cap-up, and a cap-down provided under the safety vent and electrically connected to the electrode assembly, wherein the vent extension portion has a welded area formed by welding the cap-up and the safety vent to each other, and the welded area is spaced apart from the end of the case.

The welded area may be spaced apart from an end of the case in an inward direction.

A distance between the welded area and the end of the case may be 0.2 mm or more.

The welded area may be spaced apart from an end of the vent extension portion in an outward direction.

The gasket may be located between the welded area and the end of the case.

The welded area may be in the shape of a circle.

The welded area may be in the shape of at least one arc.

The case may include a side plate and a bottom plate sealing a lower portion of the side plate, and the end of the case may be an uppermost part of the side plate.

The end of the case may be bent to form a crimping part that fixes the cap assembly.

### ADVANTAGEOUS EFFECTS OF DISCLOSURE

In the secondary battery according to an embodiment of the present invention, the sealing capability of the secondary battery can be secured and the safety of the secondary battery can be improved by spacing 0.2 mm or more between the end of the case and the welded area where the cap up and the safety vent are welded.

### BRIEF DESCRIPTION OF DRAWINGS

FIG. 1 is a cross-sectional view illustrating a secondary battery according to an embodiment of the present invention.
FIG. 2 is a cross-sectional view illustrating a cap assembly in the secondary battery according to an embodiment of the present invention.
FIG. 3 is an enlarged cross-sectional view illustrating portion A of FIG. 2.
FIGS. 4B and 4B are plan views illustrating a welded area in a cap assembly.

### BEST MODE

Hereinafter, a preferred embodiment of the present invention will be described in detail with reference to the accompanying drawings.

Examples of the present invention are provided to more completely explain the present invention to those skilled in the art, and the following examples may be modified in various other forms. The present invention, however, may be embodied in many different forms and should not be construed as being limited to the example (or exemplary) embodiments set forth herein. Rather, these example embodiments are provided so that this invention will be thorough and complete and will convey the aspects and features of the present invention to those skilled in the art.

In addition, in the accompanying drawings, sizes or thicknesses of various components are exaggerated for brevity and clarity, and like numbers refer to like elements throughout. As used herein, the term "and/or" includes any and all combinations of one or more of the associated listed items. In addition, it will be understood that when an element A is referred to as being "connected to" an element B, the element A can be directly connected to the element B or an intervening element C may be present therebetween such that the element A and the element B are indirectly connected to each other.

The terminology used herein is for the purpose of describing particular embodiments only and is not intended to be limiting of the invention. As used herein, the singular forms are intended to include the plural forms as well, unless the context clearly indicates otherwise. It will be further understood that the terms that the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, the exemplary term "below" can encompass both an orientation of above and below.

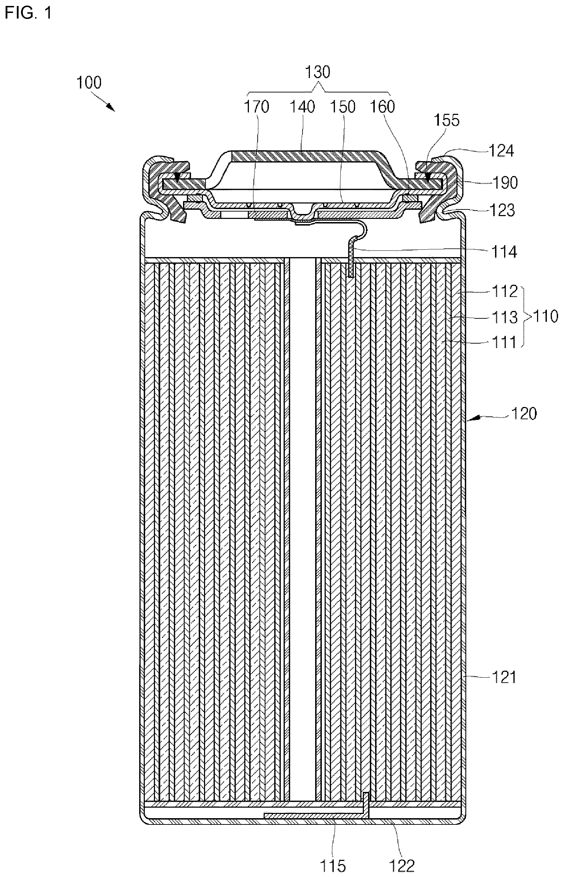

FIG. 1 is a cross-sectional view illustrating a secondary battery according to an embodiment of the present invention.

Referring to FIG. 1, the secondary battery 100 according to an embodiment of the present invention may include an electrode assembly 110, a case 120, a cap assembly 130, and a gasket 190.

The electrode assembly 110 includes a first electrode 111 and a second electrode 112 and a separator 113 interposed between the first electrode 111 and the second electrode 112. The electrode assembly 110 may be formed by winding a laminate of the first electrode 111, the separator 113, and the second electrode 112 in a jelly-roll shape. Here, the first electrode 111 may act as a positive electrode, and the second electrode 112 may act as a negative electrode. A first electrode tab 114 is connected to the cap assembly 130 at the top of the electrode assembly 110, and the second electrode tab 115 is connected to the bottom plate 122 of the case 120 at the bottom thereof.

The first electrode 111 is formed by applying a first electrode active material such as a transition metal oxide to a first electrode current collector formed of a metal foil such as aluminum. A first electrode uncoated portion to which the first electrode active material is not applied is formed on the first electrode 111, and a first electrode tab 114 is attached to the first electrode uncoated portion. One end of the first electrode tab 114 is electrically connected to the first electrode 111, and the other end protrudes upward from the electrode assembly 110 and is electrically connected to the cap assembly 130.

The second electrode 112 is formed by applying a second electrode active material such as graphite or carbon on a second electrode current collector formed of a metal foil such as copper or nickel. A second electrode uncoated portion to which the second electrode active material is not applied is formed on the second electrode 112, and a second electrode tab 115 is attached to the second electrode uncoated portion. One end of the second electrode tab 115 is electrically connected to the second electrode 112, and the other end protrudes from the bottom of the electrode assembly 110 and is electrically connected to the lower plate 122 of the case 120.

The separator 113 is positioned between the first electrode 111 and the second electrode 112 to prevent a short circuit and to enable the movement of lithium ions. The separator 113 may be made of polyethylene, polypropylene, or a composite film of polyethylene and polypropylene.

The case 120 includes a side plate 121 which is a cylindrical body having a predetermined diameter so as to form a space in which the electrode assembly 110 is accommodated, and a bottom plate 122 that seals a lower portion of the side plate 121. A top opening of the case 120 is opened to seal after inserting the electrode assembly 110 therein. In addition, a beading part 123 for preventing the movement of the electrode assembly 110 is formed on the top of the case 120. In addition, a crimping part 124 for fixing the cap assembly 130 and the gasket 190 is formed at the uppermost part of the case 120. The crimping part 124 has a gasket 190 interposed therein and is formed to press the cap assembly 130 to prevent separation of the cap assembly 130 and leakage of an electrolyte.

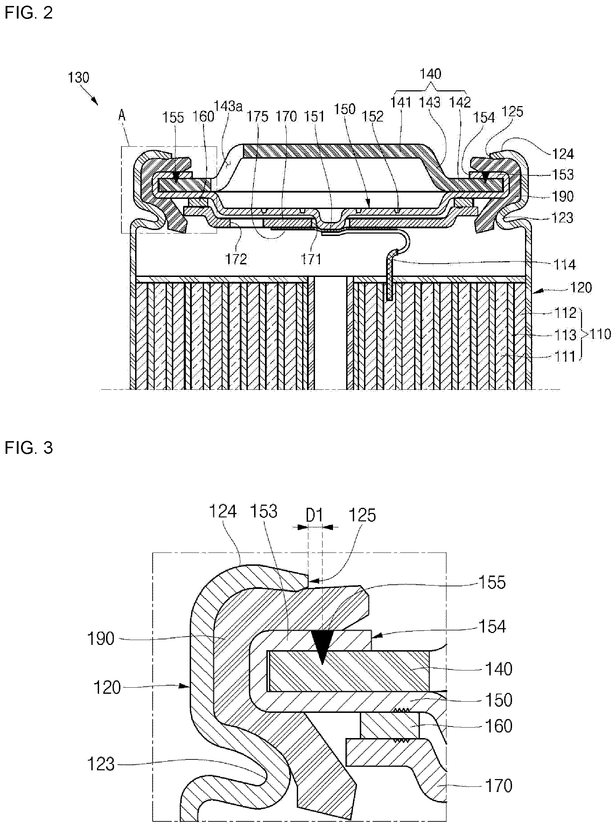

FIG. 2 is a cross-sectional view illustrating a cap assembly in the secondary battery according to an embodiment of the present invention.

Referring to FIG. 2, the cap assembly 130 may include a cap-up 140, a safety vent 150, an insulator 160, and a cap-down 170.

The cap-up 140 is formed as a circular plate body, and includes a terminal portion 141 convexly formed upward in the center, a coupling portion 142 located on the outer periphery of the terminal portion 141, and a connecting portion 143 connecting the terminal portion 141 and the coupling portion 142. The terminal portion 141 protrudes upward relative to the coupling portion 142 and serves as a terminal electrically connected to an external circuit. The terminal portion 141 is electrically connected to the first electrode tab 114 and may act as a positive electrode, for example. The coupling portion 142 is located on the outer periphery of the terminal portion 141, and the safety vent 150 is coupled to the coupling portion 142. A vent extension portion 153 of the safety vent 150 is coupled to the top of the coupling portion 142. The connecting portion 143 connects the terminal portion 141 and the coupling portion 142, and a gas discharge hole 143a is formed in the connecting portion 143. A plurality of gas discharge holes 143a may be formed in the connecting portion 143 and provide a path through which gas generated inside the case 120 may be discharged. In addition, some of the gas discharge holes 143a may extend to the terminal portion 141 and the coupling portion 142.

The safety vent 150 is formed as a circular plate body corresponding to the cap-up 140 and coupled to the bottom of the cap-up 140. A protrusion 151 protruding downward is formed at the center of the safety vent 150. The safety vent 150 is electrically connected to a sub plate 175 fixed to the lower surface of the cap-down 170 by using the protrusion 151 passing through a through-hole 171 of the cap-down 170. Here, the protrusion 151 of the safety vent 150 and the sub plate 175 may be welded by laser welding, ultrasonic welding, resistance welding, or an equivalent method thereof.

In addition, a notch 152 that guides the rupture of the safety vent 150 is formed on the outer periphery of the protrusion 151. The safety vent 150 discharges internal gas while blocking current when an abnormal internal pressure is generated inside the case 120. In the safety vent 150, when the internal pressure of the case 120 exceeds the operating pressure of the safety vent 150, the protrusion 151 rises upward by the gas discharged through a gas discharge hole 172 of the cap-down 170, and is electrically separated from the sub plate 175. Here, as the welded portion of the protrusion 151 is torn, the sub plate 175 is electrically separated from the safety vent 150. In addition, in the safety vent 150, when the internal pressure of the case 120 exceeds the rupture pressure higher than the operating pressure of the safety vent 150, the notch 152 is ruptured to prevent the secondary battery 100 from exploding. The safety vent 150 may be made of aluminum (Al).

The safety vent 150 is installed to be in close contact with the coupling portion 142 at the bottom of the cap-up 140. In addition, the edge of the safety vent 150 surrounds the cap-up 140 and extends to the top of the cap-up 140. Here, an upward extending portion of the cap-up 140 is defined as a vent extension portion 153. In addition, the upper portion of the vent extension portion 153 is welded to fix the safety vent 150 to the cap-up 140. A portion of the safety vent 150 and the cap-up 140 may be melted by such welding to form a welded area 155. Here, the safety vent 150 and the cap-up 140 may be welded by laser welding, ultrasonic welding, resistance welding, or an equivalent method thereof. A welding method between the safety vent 150 and the cap-up 140 and the welded area 155 will be described in more detail below.

The insulator 160 is interposed between the safety vent 150 and the cap-down 170 to insulate the safety vent 150 and the cap-down 170 from each other. Specifically, the insulator 160 is formed in a ring shape and is interposed between the outer periphery of the safety vent 150 and the outer periphery of the cap-down 170. The insulator 160 may be made of a resin material such as polyethylene (PE), polypropylene (PP), or polyethylene terephthalate (PET).

The cap-down 170 is formed as a circular plate body. The through-hole 171 is formed in the center of the cap-down 170, and the protrusion 151 of the safety vent 150 passes through the through-hole 171. In addition, the gas discharge hole 172 is formed on one side of the cap-down 170, and the sub plate 175 is coupled to the bottom of the cap-down 170. The gas discharge hole 172 serves to discharge internal gas when excessive internal pressure is generated inside the case 120. Here, the protrusion 151 of the safety vent 150 is raised by the gas discharged through the gas discharge hole 172, and the protrusion 151 may be separated from the sub plate 175. The sub plate 175 is welded between the protrusion 151 of the safety vent 150 passing through the through-hole 171 of the cap-down 170 and the first electrode tab 114. Accordingly, the sub plate 175 may electrically connect the first electrode tab 114 and the safety vent 150 to each other.

The gasket 190 is installed in the top opening of the case 120. That is, the gasket 190 is tightly assembled between the outer periphery of the cap-up 140 and the safety vent 150 and the top opening of the case 120. The gasket 190 may be formed of a resin material such as polyethylene (PE), polypropylene (PP), or polyethylene terephthalate (PET). The gasket 190 may electrically insulate the case 120 and the cap assembly 130 from each other.

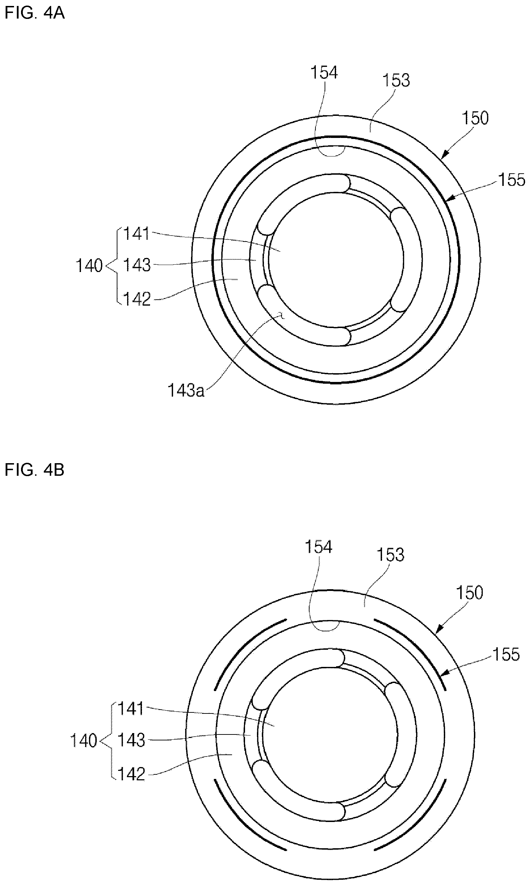

FIG. 3 is an enlarged cross-sectional view illustrating portion A of FIG. 2. FIGS. 4B and 4B are plan views illustrating a welded area in a cap assembly.

Referring to FIG. 3, the welded area 155 may be formed by melting parts of the safety vent 150 and the cap-up 140. The welded area 155 may be formed to be spaced apart from the end 125 of the case 120, and the upper portion of the welded area 155 may be covered by the gasket 190. In other words, the gasket 190 is positioned on the welded area 155 to prevent a short circuit between the safety vent 150 and the case 120. The welded area 155 is located inside (in a direction toward the center) relative to the end 125 of the case 120. In other words, the welded area 155 may be spaced apart from the end 125 of the case 120 in an inward direction. Here, the end 125 of the case 120 refers to the uppermost end of the side plate 121 of the case 120. When the crimping part 124 is formed to fix the cap assembly 130 to the case 120, the end 125 may be bent and positioned above the vent extension portion 153. As shown in FIG. 4A, the welded area 155 may be formed on the upper surface of the vent extension portion 153 in a concentric circle shape. In some examples, as shown in FIG. 4B, the welded area 155 may be formed in the shape of arcs spaced at a predetermined interval, rather than in the shape of a circle that entirely connects the upper surface of the vent extension portion 153. In addition, the sealing capability (or sealing pressure) of the secondary battery 100, that is, the sealing capability between the case 120 and the cap assembly 130, may change.

In some examples, the closer the end 125 of the case 120 and the welded area 155 are, the poorer the sealing capability of the secondary battery 100 is. The reason of the foregoing is that, since the welded area 155 is formed by melting parts of the safety vent 150 and the cap-up 140 and protrudes (rises) upward, a separation space exists between the welded area 155 and the gasket 190. Therefore, only when the end 125 of the case 120 is separated from the welded area 155 by a certain distance, it is possible to prevent the sealing capability of the secondary battery 100 from deteriorating due to the separation space between the welded area 155 and the gasket 190.

Table 1 below shows measurements of sealing pressures of the secondary battery 100 according to the separation distance D1 between the end 125 of the case 120 and the welded area 155.

First, five secondary batteries 100 having different separation distances D1 between the end 125 of the case 120 and the welded area 155 are prepared. Here, the secondary batteries 100 are discharged, and specifications of the respective secondary batteries 100 are the same, except for separation distance. Next, a hole is drilled in the side of each of the secondary batteries 100, a jig for injecting nitrogen gas is inserted, and a gas (or water) check agent is placed on the secondary battery 100. Here, the gas (or water) check agent is positioned so as to completely cover the upper part of the secondary battery 100. Then, the sealing pressure is checked by measuring a pressure gauge at the time when bubbles rise through the gas (or water) check agent while injecting nitrogen gas into the secondary battery 100 at a rate of 0.5 kgf per second. For experimental accuracy, a total of 5 measurements were taken for each separation distance and averaged. In addition, the separation distance D1 is a distance between the end 125 of the case 120 and the center point of the welded area 155.

**[Table 1]**

| Separation distance (mm) | -0.4 | -0.2 | 0 | 0.1 | 0.15 | 0.2 | 0.25 | 0.3 | 0.4 | 0.5 | 0.6 |
|---|---|---|---|---|---|---|---|---|---|---|---|
| First | 22.2 | 23.9 | 25.5 | 29.0 | 27.0 | 30.0 | 29.0 | 29.0 | 29.0 | 30.0 | 30.0 |
| Second | 23.5 | 24.5 | 23.2 | 26.0 | 30.0 | 30.0 | 28.0 | 30.0 | 31.0 | 29.0 | 31.0 |
| Third | 24.5 | 23.9 | 22.1 | 25.0 | 25.0 | 30.0 | 29.0 | 31.0 | 32.0 | 30.0 | 29.0 |
| Fourth | 23.7 | 22.5 | 24.0 | 24.0 | 26.0 | 29.0 | 30.0 | 30.0 | 30.0 | 31.0 | 30.0 |
| Fifth | 24.2 | 23.0 | 25.0 | 25.0 | 24.0 | 30.0 | 30.0 | 31.0 | 29.0 | 30.0 | 29.0 |
| Average (kgf) | 23.6 | 23.6 | 24.0 | 25.8 | 26.4 | 29.8 | 29.2 | 30.2 | 30.2 | 30.0 | 29.8 |

In addition, with regard to the sealing pressure, the secondary battery 100 in which sealing is not broken until the rupture pressure of the safety vent 150 is reached is determined as a good product. When the rupture pressure is about 30 kgf and in consideration of the tolerance (±3 kgf) according to the rupture pressure the secondary battery 100 in which the sealing pressure is about 27 kgf to about 33 kgf, is determined as a good product. As indicated in Table 1, when the distance D1 between the end 125 of the case 120 and the welded area 155 is 0.2 mm or less, the sealing pressure is less than 27 kgf, indicating that the secondary battery 100 is not completely sealed. In particular, when the welded area 155 is located outside the end 125 of the case 120, the sealing pressure is lowered to 23.6 kgf, indicating poor sealing capability. In addition, when the distance D1 between the end 125 of the case 120 and the welded area 155 is 0.2 mm or more, sealing pressure was measured to be approximately 29.2 kgf to 30.2 kgf, indicating that the secondary battery 100 was completely sealed. Accordingly, it can be seen that in order to secure the sealing capability of the secondary battery 100, the distance D1 between the end 125 of the case 120 and the welded area 155 should be 0.2 mm or more.

In some examples, the welded area 155 may be formed at the end 154 of the vent extension portion 153. Meanwhile, when the welded area 155 is formed at the end 154 of the vent extension portion 153, the sealing capability is good, but the appearance defect occurs due to the step between the vent extension portion 153 and the cap-up 140, and thus, the welded area 155 is preferably spaced apart from the end 154 of the vent extension portion 153.

As described above, in the secondary battery 100 according to the present invention, by separating the end 125 of the case 120 and the welded area 155 by 0.2 mm or more, the sealing capability of the secondary battery 100 can be ensured and, at the same time, the safety of the secondary battery 100 can be improved.

While the foregoing embodiments have been provided for carrying out the secondary battery according to the present invention, it should be understood that the embodiment described herein should be considered in a descriptive sense only and not for purposes of limitation, and various changes in form and details may be made therein without departing from the spirit and scope of the disclosure as defined by the following claims.

### INDUSTRIAL APPLICABILITY

The present invention relates to a secondary battery which can ensure sealing capability.

## Claims

1. A secondary battery comprising:
an electrode assembly;
a case in which the electrode assembly is accommodated; and
a cap assembly which is coupled to the top of the case and comprises a cap-up, a safety vent provided under the cap-up and having a vent extension portion extending to the top of the cap-up so as to cover the edge of the cap-up, and a cap-down provided under the safety vent and electrically connected to the electrode assembly,
wherein the vent extension portion has a welded area formed by welding the cap-up and the safety vent to each other, and the welded area is spaced apart from the end of the case.

2. The secondary battery of claim 1, wherein the welded area is spaced apart from an end of the case in an inward direction.

3. The secondary battery of claim 1, wherein a distance between the welded area and the end of the case is 0.2 mm or more.

4. The secondary battery of claim 1, wherein the welded area is spaced apart from an end of the vent extension in an outward direction.

5. The secondary battery of claim 1, wherein the gasket is located between the welded area and the end of the case.

6. The secondary battery of claim 1, wherein the welded area is in the shape of a circle.

7. The secondary battery of claim 1, wherein the welded area is in the shape of at least one arc.

8. The secondary battery of claim 1, wherein the case include a side plate and a bottom plate sealing a lower portion of the side plate, and the end of the case is an uppermost part of the side plate.

9. The secondary battery of claim 1, wherein the end of the case is bent to form a crimping part that fixes the cap assembly.
